(19) Europäisches Patentamt
European Patent Office
Office européen des brevets

(11) **EP 1 554 602 B1**

(12) **EUROPÄISCHE PATENTSCHRIFT**

(45) Veröffentlichungstag und Bekanntmachung des Hinweises auf die Patenterteilung:
**18.07.2007 Patentblatt 2007/29**

(51) Int Cl.:
*G01S 13/34* *(2006.01)*    *G01S 13/58* *(2006.01)*
*G01S 13/93* *(2006.01)*

(21) Anmeldenummer: 03720168.8

(22) Anmeldetag: **14.03.2003**

(86) Internationale Anmeldenummer:
**PCT/DE2003/000821**

(87) Internationale Veröffentlichungsnummer:
**WO 2004/029650 (08.04.2004 Gazette 2004/15)**

(54) **VERFAHREN ZUR ABSTANDS- UND GESCHWINDIGKEITSMESSUNG AN MEHREREN OBJEKTEN MITTELS FMCW-RADAR**

METHOD FOR MEASURING DISTANCES AND SPEEDS OF SEVERAL OBJECTS BY MEANS OF AN FMCW RADAR

PROCEDE DE MESURE DE LA DISTANCE ET DE LA VITESSE DE PLUSIEURS OBJETS AU MOYEN D'UN RADAR A ONDES ENTRETENUES MODULEES EN FREQUENCE (FMCW)

(84) Benannte Vertragsstaaten:
**DE FR GB**

(30) Priorität: **20.09.2002 DE 10243811**

(43) Veröffentlichungstag der Anmeldung:
**20.07.2005 Patentblatt 2005/29**

(73) Patentinhaber: **ROBERT BOSCH GMBH**
**70442 Stuttgart (DE)**

(72) Erfinder:
• **ULBRICHT, Dirk**
**88239 Wangen i.A. (DE)**
• **WINTER, Klaus**
**71701 Schwieberdingen (DE)**

(56) Entgegenhaltungen:
US-A- 5 619 208    US-A- 5 625 362
US-A- 5 963 162

• **PATENT ABSTRACTS OF JAPAN vol. 2000, no. 01, 31. Januar 2000 (2000-01-31) & JP 11 271432 A (TOYOTA CENTRAL RES &DEV LAB INC), 8. Oktober 1999 (1999-10-08)**
• **PATENT ABSTRACTS OF JAPAN vol. 2000, no. 04, 31. August 2000 (2000-08-31) & JP 2000 019245 A (NEC CORP), 21. Januar 2000 (2000-01-21)**

**Beschreibung**

Stand der Technik

Die Erfindung betrifft ein Verfahren zur Abstands- und Geschwindigkeitsmessung an mehreren Objekten mittels FMCW-Radar, bei dem:

- Messungen mit mindestens zwei verschiedenen Frequenzrampen zyklisch wiederholt werden,
- in jeder Messung das gesendete Signal mit dem empfangenen Signal gemischt wird und das Spektrum des gemischten Signals aufgenommen wird,
- in einer Matching-Prozedur die zu demselben Objekt gehörenden Peaks in den für verschiedene Rampen aufgenommenen Spektren einander zugeordnet werden und die Abstände und Geschwindigkeiten der Objekte aus den Frequenzen der Peaks berechnet werden und
- in einer Tracking-Prozedur die zu verschiedenen Zeiten gemessenen Objekte anhand der Konsistenz ihrer Abstands- und Geschwindigkeitsdaten miteinander identifiziert werden.

Insbesondere befaßt sich die Erfindung mit einem Verfahren dieser Art, das in Abstandswarngeräten oder Abstandsregelsystemen für Kraftfahrzeuge eingesetzt wird.

Aus der Praxis ist ein Abstandsregelsystem, ein sogenanntes ACC-System (Adaptive Cruise Control) für Kraftfahrzeuge bekannt, das mit einem FMCW-Radar (Frequency Modulated Continous Wave) arbeitet. Das Funktionsprinzip wird beschrieben in Winner: "Adaptive Cruise Control", Automotive Electronics Handbook, herausgegeben von Ronald K. Jurgen, 2. Auflage, McGraw-Hill Inc., Kapitel 30.1 (1999). Die Radarwellen werden kontinuierlich emittiert, und die Frequenz wird gemäß einer Rampenfunktion moduliert, die aus einer zyklischen Abfolge von vier Rampen mit unterschiedlichen Steigungen besteht. Die Rampen bilden zwei Paare, die jeweils aus einer steigenden und einer fallenden Rampe bestehen. Die Beträge der Steigungen sind innerhalb jedes Paares gleich, jedoch von Paar zu Paar verschieden. Durch Mischen des gesendeten Signals mit dem empfangenen Signal, das durch Reflexion der Radarwellen an mehreren Objekten entsteht, wird ein NF-Signal gebildet, dessen Frequenz der Differenz zwischen der Frequenz des gesendeten Signals und der Frequenz des reflektierten Signals entspricht. In jeder einzelnen Messung wird während der Dauer einer Frequenzrampe mit konstanter Steigung das Spektrum des NF-Signals aufgenommen. In diesem Spektrum wird jedes Objekt durch eine Peak repräsentiert, dessen Frequenz f gemäß folgender Gleichung von dem Abstand d und der Geschwindigkeit v (Relativgeschwindigkeit) des Objekts abhängig ist:

$$f = | (2 * F / c * T) * d + (2 * f_S/c) * v | \qquad (1)$$

Darin bedeuten:

f      Peak-Frequenz im NF-Signal

F      Frequenzhub (Frequenz am Ende der Rampe - Frequenz am Beginn der Rampe)

c      Lichtgeschwindigkeit

T      Modulationsdauer (der Rampe)

$f_s$      Frequenz des gesendeten Signals

Der erste Term in Gleichung (1) ist proportional zur Signallaufzeit, d/c und zur Rampensteigung F/T. Der zweite Term entspricht der Dopplerverschiebung des reflektierten Signals.

Wenn nur ein einziges reflektierendes Objekt vorhanden ist, lassen sich der Abstand d und die Relativgeschwindigkeit v dieses Objekts aus den Peak-Frequenzen $f_1$ und $f_2$ berechnen, die durch zwei Messungen mit unterschiedlichen Rampensteigungen erhalten werden. Dazu wird das folgende Gleichungssystem gelöst:

$$f_1 = \alpha * d + \beta * v \qquad (2)$$

$$f_2 = \gamma * d + \beta * v$$

mit:

$$\alpha = 2 * f / c * T$$

für die erste Rampe,

$$\beta = 2 * f_S / c$$

$$\gamma = 2 * F / c * T$$

für die zweite Rampe

Bei mehreren Objekten kommt es jedoch zu Mehrdeutigkeiten, weil nicht klar ist, welcher Peak zu welchem Objekt gehört. Diese Mehrdeutigkeit wird bei dem bekannten Verfahren dadurch beseitigt, daß zwei zusätzliche Messungen mit einer anderen Rampensteigung durchgeführt werden. Da sich die Abstände und Relativgeschwindigkeiten der Objekte innerhalb der Zeit, in der die vier Messungen durchgeführt werden, allenfalls geringfügig ändern, muß die Zuordnung zwischen den Peaks und den Objekten so vorgenommen werden, daß man für die ersten beiden Messungen die gleichen Abstände und Relativgeschwindigkeiten erhält wie für die letzten beiden Messungen. Diese Zuordnung der Peaks zu den Objekten wird als "Matching" bezeichnet.

Für praktische Anwendungen, beispielsweise in einem ACC-System, ist es generell erforderlich, die gemessenen Abstände und Relativgeschwindigkeiten der verschiedenen Objekte über einen längeren Zeitraum verfolgen zu können. In einer Prozedur, die als "Tracking" bezeichnet wird, müssen deshalb die in einem Meßzyklus gemessenen Objekte mit den in einem vorangegangenen Zyklus gemessenen Objekten identifiziert werden. Diese Tracking-Prozedur basiert auf dem Kriterium, daß die zu verschiedenen Zeiten gemessenen Abstände und Relativgeschwindigkeiten für jedes Objekt eine plausible und insbesondere physikalisch mögliche Bewegung des Objekts ergeben müssen.

In US 5 600 561 A wird ein Verfahren beschrieben, bei dem mit Hilfe des Radars nur die Abstände gemessen werden und die Objektgeschwindigkeiten aus den Abstandsänderungen berechnet werden. Die Zuordnung der für verschiedene Objekte gemessenen Abstände zu den einzelnen Objekten wird dabei so vorgenommen, daß die neu aufgenommenen Abstandsdaten mit den zuvor berechneten Geschwindigkeiten konsistent sind.

Ein FMCW-Radar hat demgegenüber den Vorteil, daß die Relativgeschwindigkeiten der Objekte direkt gemessen werden können. Allerdings lassen sich verschiedene Objekte sowohl hinsichtlich ihrer Abstände als auch hinsichtlich Ihrer Relativgeschwindigkeiten nur mit einer begrenzten Auflösung voneinander unterscheiden.

Aus der US 5,625,362 ist ein FMCW-Radargerät mit einem digitalen Signalprozessor bekannt, welcher über einen Oszillator wenigstens eine Antenne steuert und aus dreieckförmig modulierten Sende- und Empfangssignalen ein Mischsignal erzeugt, welches je Modulationsphase (auf und ab) jedes Meßzyklus einer schnellen Fouriertransformation unterworfen wird, um aus den ermittelten Maxima jedem Zielobjekt zugeordnete Objektfrequenzen zu erhalten, aus denen über mehrere Meßzyklen zurückreichende Objektbahnen gebildet werden, die zur Bildung von Schätzwerten für die im nächsten Meßzyklus zu erwartenden Meßwerte der Objektfrequenzen herangezogen werden, wobei die zueinander gehörenden Objektfrequenzen beider Modulationsphasen eines Meßzyklus bestimmt und aus Ihnen Abstand und Relativgeschwindigkeit jedes Zielobjekts ermittelt werden.

Aus der US 5,963,162 ist ein Objektdetektionssystem bekannt, das eine FMCW-modulierte Welle verwendet, so dass selbst wenn ein Frequenz-Peak einer steigenden oder einer fallenden Flanke fehlt und damit eine Vielzahl von Objekten erkannt werden können indem mehrere steigende und fallende Flanken miteinander kombiniert werden. Wenn festgestellt wird, dass ein Frequenz-Peak fehlt wird aus der Kombination der bekannten Frequenz-Peaks der fehlende berechnet.

Aus der US 5,619,208 ist ein frequenzmoduliertes Dauerstrichradarsystem bekannt, in dem ein Überlagerungssignal frequenzanalysiert wird um Überlagerungsfrequenzen einer ansteigenden Seite und Überlagerungsfrequenzen einer abfallenden Seite für eine Mehrzahl von Zielen auszuwählen. Durch Paaren der Überlagerungsfrequenzen der ansteigenden Seite und abfallenden Seite eine nach der anderen von jeder Seite, werden alle möglichen Kombinationen davon vorbereitet. Auf der Grundlage dieser Überlagerungsfrequenzkombinationen werden jeweilige Überlagerungsfrequenzkombinationen nach einer gegebenen Zeit vorhergesagt. Wenn eine Überlagerungsfrequenz der ansteigenden Seite und eine Überlagerungsfrequenz der abfallenden Seite der vorhergesagten Überlagerungsfrequenzkombination in Oberlagerungsfrequenzen der ansteigenden Seite bzw. Überlagerungefrequenzen der abfallenden Seite, die nach der gegebenen Zeit ausgewählt werden, oder in der Nähe davon festgestellt werden, wird die vorhergesagte Überlagerungsfrequenzkombination der festgestellten Überlagerungsfrequenzen der ansteigenden Seite und abfallenden Seite als eine korrekte Überlagerungsfrequenzkombination gesetzt.

Vorteile der Efindung

Aufgabe der Erfindung ist es, ein Verfahren zur Abstands- und Geschwindigkeitsmessung mittels FMCW-Radar zu schaffen, daß eine verbesserte Objektauflösung ermöglicht.

Diese Aufgabe wird erfindungsgemäß bei einem Verfahren der Eingangs genannten Art dadurch gelöst, daß

- jeder Meßzyklus höchstens drei Messungen mit verschiedenen Frequenzrampen umfaßt,
- für jede plausible Kombination aus zwei Peaks, von denen einer bei einer ersten Messung und der andere bei einer zweiten Messung desselben Zyklus aufgenommen wurde, der Abstand und die Geschwindigkeit eines durch diese Peaks repräsentierten möglichen Objekts berechnet werden,
- aus dem Abstand und der Geschwindigkeit des möglichen Objekts das erwartete Resultat mindestens einer weiteren Messung berechnet wird und
- das mögliche Objekt verworfen wird, wenn nicht mindestens ein erwartetes Resultat mit dem gemessenen Resultat übereinstimmt.

Eine Ursache für das begrenzte Auflösungsvermögen des FMCW-Radars besteht darin, daß die in den einzelnen Spektren auftretenden Peaks jeweils eine endliche Breite haben. Dabei besteht eine "Unschärferelation" zwischen der Breite dieser Peaks und der Zeit, die zur Aufnahme der Spektren zur Verfügung steht. Wenn z. B. die NF-Signale abgetastet werden, um diskrete Spektren mit einer Anzahl n von Abtastwerten zu erhalten, so steht für jeden Abtastwert die Abtastzeit T/n zur Verfügung (T = Modulationsdauer). In diesem Fall ist die Auflösung bezüglich des Abstands proportional zum Modulationshub F, und die Auflösung bezüglich der Relativgeschwindigkeit ist proportional zur Modulationsdauer T.

Das erfindungsgemäße Verfahren hat nun gegenüber dem herkömmlichen Verfahren den Vorteil, daß innerhalb jedes Meßzyklus nicht vier, sondern höchstens drei Messungen durchgeführt werden, so daß bei gleicher Zyklusdauer eine größere Modulationsdauer zur Verfügung steht und dementsprechend eine bessere Auflösung hinsichtlich der Relativgeschwindigkeit erreicht wird.

Die Beseitigung von Mehrdeutigkeiten im Fall mehrerer Objekte wird bei dem erfindungsgemäßen Verfahren dadurch erreicht, daß die Matching-Prozedur und die Tracking-Prozedur miteinander verknüpft werden. Wenn sich m-Objekte im Ortungsbereichs des Radars befinden, erhält man bei der ersten Messung Peaks bei den Frequenzen f(1,i), i = 1 .... m, und bei der zweiten Messung erhält man Peak-Frequenzen f(2,j), j = 1, ...., m. Jedes Paar (i, j) von Peaks wir als ein mögliches Objekt betrachtet, dem sich ein Abstand di,j und eine Relativgeschwindigkeit vi,j zuordnen läßt. Aus den so gewonnenen Abstands- und Relativgeschwindigkeitsdaten für jedes mögliche Objekt läßt sich berechnen, welches Resultat für dieses Objekt bei einer weiteren Messung zu erwarten wäre. Bei dieser weiteren Messung kann es sich je nach Ausführungsvariante des Verfahrens um eine Abstands- und Geschwindigkeitsmessung in einem anderen Meßzyklus oder um eine dritte Messung innerhalb desselben Zyklus handeln, mit einer von den beiden ersten Messungen verschiedenen Rampensteigung. Das erwartete Resultat wird dann mit dem tatsächlich bei der weiteren Messung erhaltenen Resultat verglichen, und wenn diese Resultate nicht übereinstimmen, wird das betreffende Objekt verworfen. Es bleiben somit nur die Abstands- und Geschwindigkeitsdaten für diejenigen Peakpaare übrig, denen reale Objekte entsprechen.

Vorteilhafte Ausgestaltungen der Erfindung ergeben sich aus den Unteransprüchen.

In einer Ausführungsform umfaßt der Meßzyklus lediglich zwei Messungen mit entgegengesetzt gleichen Rampensteigungen. Bei gegebener Zyklusdauer ist dann die Modulationsdauer doppelt so groß wie bei den herkömmlichen Verfahren, bei denen mit vier Messungen gearbeitet wird. Dementsprechend wird die Auflösung hinsichtlich der Relativgeschwindigkeiten um den Faktor 2 verbessert. Ein weiterer Vorteil besteht darin, daß sämtliche Messungen mit einem maximalen Frequenzhub durchgeführt werden können, bei dem der zur Verfügung stehende Frequenzbereich des Mikrowellensenders voll ausgenutzt wird. Dementsprechend wird auch bei jeder Messung eine maximale Auflösung hinsichtlich des Abstands erreicht, während bei dem herkömmlichen Verfahren zwei der vier Messungen mit einer kleineren Rampensteigung und dementsprechend mit einem kleineren Frequenzhub ausgeführt werden mußten. Insgesamt läßt sich so bei relativ kleiner Zyklusdauer -und entsprechend hoher zeitlicher Auflösung bei der Objektsuche und -verfolgung - sowohl hinsichtlich der Abstandsmessung als auch hinsichtlich der Relativgeschwindigkeitsmessung eine hohe Auflösung erreichen.

Die weitere Messung, deren Resultat mit dem erwarteten Resultat verglichen wird, besteht bei dieser Ausführungsform in einer Abstands- und Relativgeschwindigkeitsmessung in einem früheren oder späteren Meßzyklus. Die Übereinstimmung der Resultate bedeutet dann nicht nur, daß es sich bei dem betreffenden möglichen Objekt um ein reales Objekt handelt, sondern bedeutet zugleich, daß das Objekt auch mit einem Objekt in dem früheren oder späteren Meßzyklus identifiziert wurde, so daß die Tracking-Prozedur erfolgreich war.

Beispielsweise wird aus dem im aktuellen Zyklus gemessenen Abstand und der zugehörigen Relativgeschwindigkeit berechnet, welchen Abstand dasselbe Objekt im unmittelbar vorausgegangenen Meßzyklus gehabt haben müßte. Im einfachsten Fall kann dabei angenommen werden, daß die Änderung der Relativgeschwindigkeit von Meßzyklus zu Meßzyklus vernachlässigbar klein ist.

Wahlweise kann jedoch auch eine erweiterte Tracking-Prozedur angewandt werden, bei der nicht nur der unmittelbar vorausgegangene Meßzyklus, sondern eine größere Anzahl vorausgegangener Meßzyklen berücksichtigt wird. Es ist möglich, daß von einem realen Objekt aufgrund von Störeinflüssen innerhalb eines einzelnen Meßzyklus kein Echo empfangen wurde. In diesem Fall bietet die erweiterte Tracking-Prozedur mit Berücksichtigung mehrerer Meßzyklen den Vorteil, daß das Objekt gleichwohl als reales Objekt erkannt und erfolgreich "getrackt" werden kann.

Statt den erwarteten Abstand und die erwartete Relativgeschwindigkeit des Objekts für einen vorausgegangenen Meßzyklus zu berechnen und mit den tatsächlich gemessenen Werten zu vergleichen, ist es in einer modifizierten Ausführungsform auch möglich, aus den im aktuellen Zyklus gemessenen Daten direkt die Frequenz zu berechnen, bei der in dem anderen (früheren oder späteren) Zyklus der Peak für dieses Objekt gefunden werden müßte. Das Resultat läßt sich dann sehr leicht verifizieren, indem gezielt nach einem Peak an dieser Stelle gesucht wird. Auch bei dieser Variante ist ein erweitertes Tracking mit Berücksichtigung mehrerer Meßzyklen möglich.

Bei der Ausführungsform des Verfahrens, bei der mit drei Messungen innerhalb eines Meßzyklus gearbeitet wird, hat bevorzugt die dritte Messung eine größere Modulationsdauer als die beiden ersten Messungen. Auf diese Weise wird speziell bei der dritten Messung eine besonders hohe Auflösung hinsichtlich der Relativgeschwindigkeit erreicht. Auch bei der dritten Messung kann wieder mit maximalem Frequenzhub gearbeitet werden, so daß auch hier bei sämtlichen Messungen eine maximale Abstandsauflösung erreicht wird.

Auch diese Ausführungsform läßt sich mit dem Tracking unter Berücksichtigung des unmittelbar vorausgehenden Meßzyklus oder mehrerer vorangegangener Meßzyklen kombinieren. Beispielsweise kann für reale Objekte verlangt werden, daß in zwei aufeinanderfolgenden Messungen in allen drei Spektren die entsprechende Frequenz gemessen wurde. Wahlweise kann dieses Verfahren aber auch so mit dem Trakking kombiniert werden, daß die Bestätigung, ob es sich um ein reales Objekt handelt, situationsabhängig mit Hilfe des einfachen Trackings, mit Hilfe der dritten Frequenzrampe oder mit beiden erfolgt. Dabei können die dritte Rampe und das Tracking auch durch "oder" verknüpft werden, so daß ein Objekt als real erkannt wird, wenn nur eines der erwarteten Resultate bestätigt wird, sei es das Resultat für den vorausgegangenen Meßzyklus oder das Resultat für die Messung mit der dritten Frequenzrampe. Auch bei diesen Varianten ist in allen Kombinationen ein erweitertes Tracking mit Berücksichtigung von mehr als zwei Meßzyklen möglich.

Zeichnung

Im folgenden werden Ausführungsbeispiele der Erfindung anhand der Zeichnungen näher erläutert.
Es zeigen:

Figur 1          ein Frequenz/Zeit-Diagramm zur Erläuterung der Funktionsweise eines FMCW-Radars;

Figur 2          Beispiele für Spektren, die mit dem FMCW-Radar aufgenommen werden;

Figur 3          ein Diagramm zur Erläuterung eines Verfahrens zur Bestimmung des Objektabstands,

Figur 4          ein Diagramm analog zu Figur 3, jedoch für einen größeren Frequenzhub des Radarsignals;

Figur 5          ein Diagramm zur Erläuterung eines Verfahrens zur Bestimmung der Relativgeschwindigkeiten von Objekten;

Figur 6          ein Diagramm analog zu Figur 5, jedoch für einen größeren Frequenzhub des Radarsignals;

Figur 7          ein Flußdiagramm zur Erläuterung des allgemeinen Prinzips einer ersten Ausführungsform des erfindungsgemäßen Verfahrens;

Figur 8 ein detaillierteres Flußdiagramm des Verfahrens nach Figur 7;

Figur 9 ein Flußdiagramm einer Unterroutine in dem Verfahren gemäß Figur 8;

Figuren 10 und 11 Ausführungsbeispiele für eine weitere Unterroutine in dem Verfahren gemäß Figur 8;

Figur 12 ein Flußdiagramm zu einer Abwandlung des Verfahrens gemäß Figur 8;

Figuren 13 und 14 Beispiele für eine Unterroutine in dem Verfahren gemäß Figur 12;

Figur 15 ein Frequenz/Zeit-Diagramm für eine andere Ausführungsform des Verfahrens; und

Figuren 16 bis 18 Flußdiagramme für unterschiedliche Varianten des Verfahrens nach Figur 15.

Beschreibung von Ausführungsbeispielen

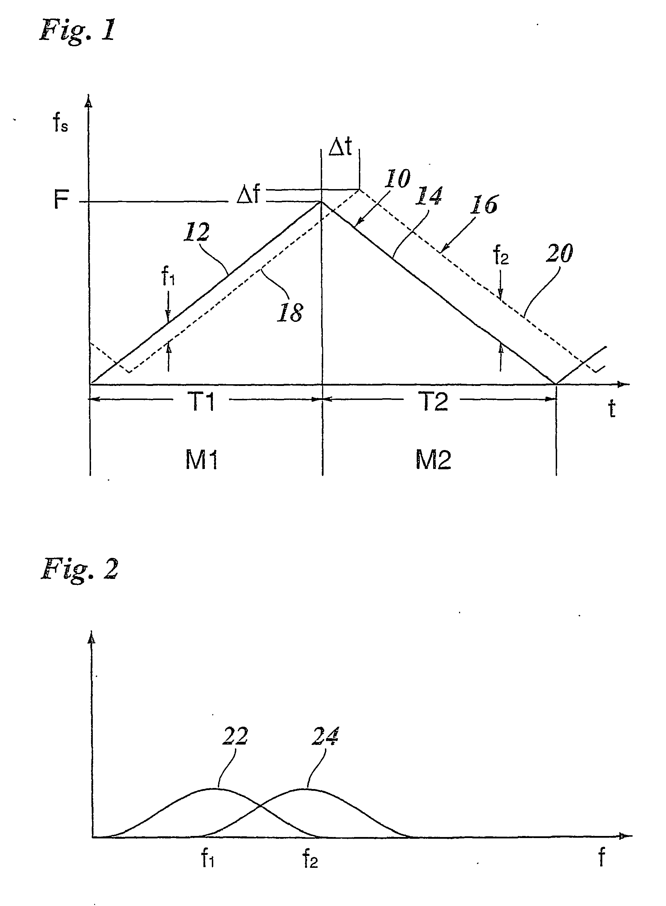

Gemäß Figur 1 werden bei einem FMCW-Radar fortlaufend Radarwellen mit variabler Frequenz $f_s$ emittiert. Die fett eingezeichnete Kurve 10 gibt die Zeitabhängigkeit der Frequenz $f_s$ an. Diese Frequenz wird periodisch variiert gemäß einer Rampenfunktion mit einer ansteigenden ersten Rampe 12 und einer abfallenden zweiten Rampe 14. Die Rampen 12, 14 gehören zu zwei Messungen M1 und M2, die zyklisch wiederholt werden. Die Rampen für beide Messungen haben den gleichen Frequenzhub F und gleiche Modulatinsdauern T1 und T2, und folglich sind ihre Steigungen entgegengesetzt gleich.

Die Frequenzkurve 16 für das zugehörige Radarecho eines einzelnen Objektes ist gestrichelt dargestellt. Diese Kurve weist die gleichen Rampen 18 und 20 auf, jedoch mit einem Zeitversatz $\Delta t$, der durch den Objektabstand gegeben ist, und mit einem Frequenzversatz $\Delta f$, der durch die Dopplerverschiebung bestimmt ist.

Im Radarsensor wird die ausgesandte Welle mit dem empfangenen Radarecho gemischt, so daß man ein niederfrequentes Schwebungssignal (NF-Signal) mit einer Frequenz f enthält, die dem Frequenzunterschied zwischen den emittierten Wellen und den empfangenen Wellen entspricht. Von diesem Schwebungssignal wird während jeder Messung M1, M2 ein Frequenzspektrum aufgenommen, beispielsweise durch Schnelle Fouriertransformation.

Figur 2 zeigt Beispiele für zwei Frequenzspektren 22, 24, die bei den beiden Messungen M1 und M2 erhalten werden, wenn sich ein einzelnes Objekt, z.B. ein vorausfahrendes Fahrzeug, im Ortungsbereich Radars befindet. Jedes Spektrum hat in diesem Fall einen Peak mit einem Scheitel bei der Peak-Frequenz $f_1$ bzw. $f_2$, die dem Frequenzunterschied der Kurven 10 und 16 auf den betreffenden Rampen 12 und 18 bzw. 14 und 20 entspricht. Der Frequenzunterschied ist maßgeblich von dem Produkt aus dem Zeitversatz $\Delta t$ (Signallaufzeit) und der Rampensteigung abhängig, wird jedoch während der ansteigenden Flanken 12, 18 um die Dopplerfrequenz vermindert, während der abfallenden Flanken 14, 20 hingegen um die Dopplerfrequenz vergrößert (bei positiver Dopplerverschiebung zu größeren Frequenzen, entsprechend einer Annäherung des Radarziels). Der Mittelwert der Frequenzen f1 und f2, bei denen die beiden Peaks 22, 24 in Figur 2 liegen, entspricht daher der Signallaufzeit und gibt somit den Abstand d des Objekts an, während die Hälfte der Differenz zwischen diesen beiden Frequenzen die Dopplerverschiebung und damit Betrag und Vorzeichen der Relativgeschwindigkeit v des Objekts angibt. Die Relativgeschwindigkeit v ist proportional zu $(f_1 - f_2) / 2$.

Während der Dauer einer einzelnen Messung M1 oder M2 ist die Frequenz des NF-Signals, dessen Spektrum in Figur 2 gezeigt ist, weitgehend konstant. Dennoch haben die Peaks 22, 24 auch bei scharf definierten Objektabständen d und Relativgeschwindigkeiten v eine gewisse Breite, die aufgrund der Eigenschaften der Fouriertransformation etwa umgekehrt proportional zur Meßzeit ist. Die zur Verfügung stehende Meßzeit ist ihrerseits proportional zur Modulationsdauer T1 bzw. T2.

Wenn sich im Ortungsbereich des Radars zwei Objekte befinden, deren Peaks so nahe bei einander liegen, daß ihr Abstand klein im Verhältnis zur Breite der Peaks ist, so können die entsprechenden Peaks im Spektrum nicht mehr aufgelöst werden, und folglich lassen sich beiden Objekte nicht mehr voneinander unterscheiden. Die Auflösung ist um so besser, je schärfer die Peaks definiert sind, d. h., je größer die Modulationsdauern T1, T2 sind.

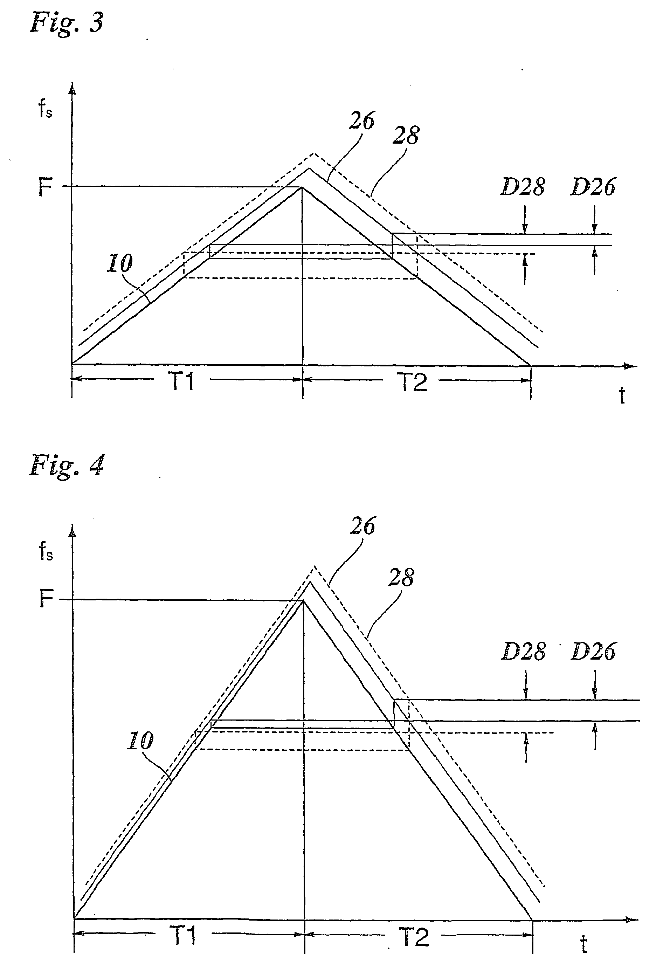

Die Auflösung hinsichtlich des Objektabstands läßt sich verbessern, indem der Frequenzhub F vergrößert wird. Dies soll anhand der Figuren 3 und 4 erläutert werden.

In Figur 3 sind außer der Kurve 10 die Kurven 26, 28 zweier Radar-Echos eingezeichnet, die von zwei verschiedenen Objekten erhalten werden. Für jede der Kurven 26, 28 ist die Differenz D26 bzw. D28 zwischen den Peak-Frequenzen auf der ersten und zweiten Rampe angegeben. Diese Differenz ist von der Dopplerverschiebung unabhängig und repräsentiert daher allein die Laufzeit und damit den Objektabstand d.

Figur 4 zeigt das gleiche für einen größeren Frequenzhub F. Man erkennt, daß hier die Differenzen D26 und D28 proportional zum Frequenzhub vergrößert sind, so daß sich die Peaks deutlicher unterscheiden lassen. Die gleiche Spreizung der Differenzen D26 und D28 ließe sich auch dadurch erreichen, daß bei unverändertem Frequenzhub F die Modulationsdauern verkleinert werden, so daß man die gleichen Rampensteigungen erreicht wie in Figur 4. Die größere Spreizung würde dann jedoch nicht zu einer höheren Auflösung führen, da sich aufgrund der kürzeren Meßdauer die Peaks entsprechend verbreitern würden. Der entscheidende Parameter für die Auflösung der Abstände ist deshalb der Frequenzhub F. Bei dem hier beschriebenen Beispiel wird bei beiden Messungen M1 und M2 mit dem maximalen Frequenzhub gearbeitet, der aufgrund der Konzeption des Radargerätes erreichbar ist.

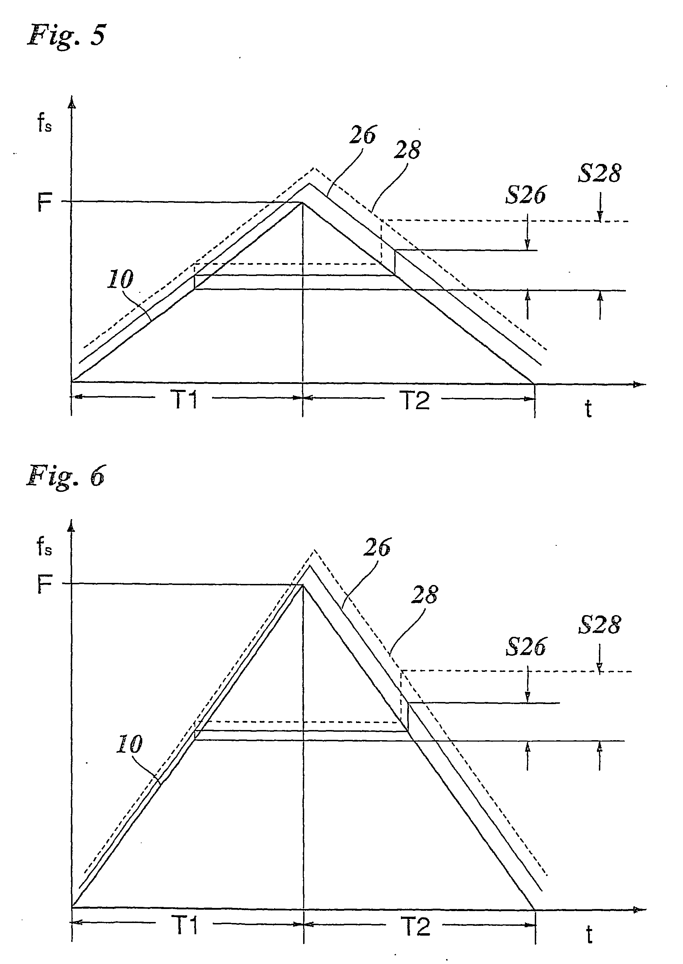

In Figuren 5 und 6 ist illustriert, daß sich durch Vergrößerung des Frequenzhubes F keine bessere Auflösung hinsichtlich der Relativgeschwindigkeiten erreichen läßt. In Figur 5 sind für die beiden Kurven 26 und 28 die Summen S26 und S28 der Frequenzunterschiede auf den beiden Rampen angegeben. Die abstandsabhängigen Laufzeitdifferenzen haben auf den Frequenzunterschied in den beiden Rampen die genau gegenteilige Wirkung und heben sich daher bei der Summenbildung auf, so daß die Summen S26 und S28 allein die Dopplerverschiebung für die betreffenden Objekte repräsentieren. Da diese Dopplerverschiebung nicht vom Frequenzhub abhängig ist, sind die Summen S26 und S28 in Figur 6 nicht größer als in Figur 5. Eine bessere Auflösung hinsichtlich der Realivgeschwindigkeiten läßt sich deshalb nur durch längere Modulationsdauern T1, T2 erreichen.

Andererseits sollte aber die gesamte Zykluszeit T = T1 + T2 nicht zu groß sein, damit die in einem Meßzyklus erkannten Objekte im nächsten Meßzyklus mit Hilfe einer Tracking-Prozedur aufgrund ähnlicher Abstände und Relativgeschwindigkeiten wiedererkannt werden können und damit sich die Bewegungen der Objekte mit hoher Zeitauflösung verfolgen lassen. Bei der hier gezeigten Ausführungsform lassen sich diese einander widersprechenden Anforderungen erfüllen, da während eines Meßzyklus nur zwei Messungen durchgeführt zu werden brauchen, so daß die Modulationsdauer relativ groß ist (halb so groß wie die Zyklusdauer). Es wird jedoch eine Matching-Prozedur benötigt, die es gestattet, aufgrund der zwei Messungen pro Meßzyklus die Mehrdeutigkeiten bei der Erkennung mehrerer Objekte zu beseitigen, indem die bei der ersten Messung aufgenommenen Peaks und die bei der zweiten Messung aufgenommenen Peaks einander richtig zugeordnet werden.

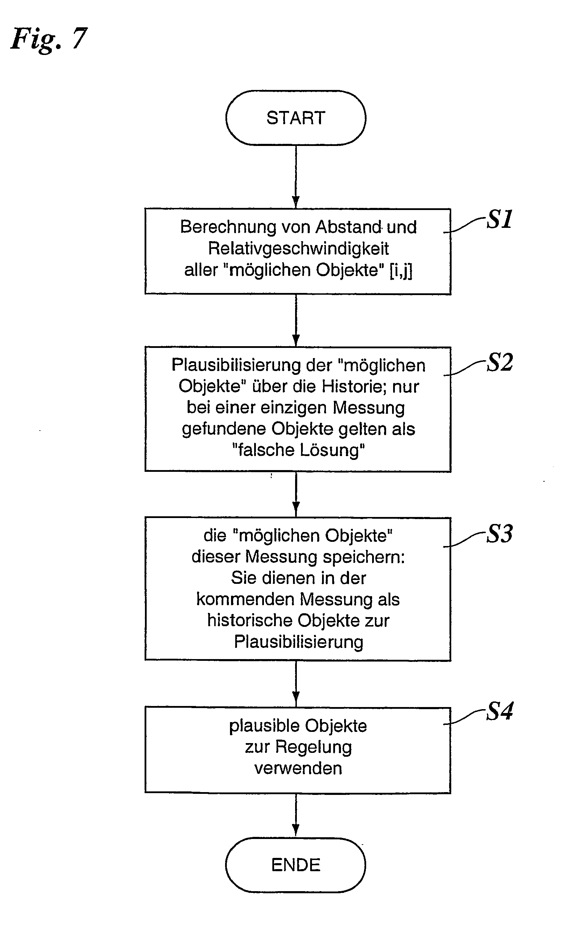

Dies wird bei dem hier beschriebenen Verfahren dadurch erreicht, daß die Matching-Prozedur mit der Tracking-Prozedur kombiniert wird, wie in groben Zügen in Figur 7 dargestellt ist.

Dazu werden in Schritt S1 in Figur 7 zunächst die Abstände und Relativgeschwindigkeiten für alle "möglichen Objekte" [i, j] berechnet. Als "mögliche Objekte" werden dabei alle Paare [i, j] von Peaks betrachtet, wobei i die laufende Nummer aller Peaks aus dem bei der ersten Messung M1 aufgenommenen Spektrum und j die laufende Nummer aller Peaks aus dem bei der Messung M2 aufgenommenen Spektrum ist. Wenn insgesamt m-Objekte vorhanden sind, gibt es in jedem Spektrum m Peaks, und die Anzahl der möglichen Objekte ist $m^2$. Die realen Objekte werden durch eine aus m Paaren bestehende Teilmenge der Menge aller möglichen Objekte repräsentiert.

In Schritt S2 werden die realen Objekte von den irrealen Objekten unterschieden, indem die Historie, d. h., die Ergebnisse vorangegangener Messungen herangezogen werden. Das Kriterium ist dabei, daß für reale Objekte ein plausibler Zusammenhang zwischen den Resultaten der aktuellen Messung und den Resultaten einer der vorausgegangenen Messungen bestehen muß. Beispielsweise ist es möglich, die Abstände und Relativgeschwindigkeiten aus dem aktuellen Meßzyklus mit den Abständen und Realtivgeschwindigkeiten aus dem vorangegangenen Meßzyklus zu vergleichen, wie es üblicherweise auch bei einer Tracking-Prozedur geschieht. Für reale Objekte sollten dann die Relativgeschwindigkeiten nahezu identisch sein, und die Differenz zwischen den Abständen muß annähernd mit dem Produkt aus der Relativgeschwindigkeit und der Zyklusdauer T übereinstimmen. Peakpaare, für die sich nicht in mindestens einer der vorangegangenen Messungen ein Partner findet, der diese Kriterien erfüllt, werden als "falsche Lösung", d. h., als irreale Objekte ausgesondert. Dabei werden allerdings zu Unrecht auch reale Objekte ausgesondert, die im aktuellen Meßzyklus erstmals vom Radargerät erfaßt wurden. Damit diese Objekte in späteren Meßzyklen erkannt werden können, werden in Schritt S3 die Resultate für alle möglichen Objekte gespeichert. Für die weitere Auswertung, beispielsweise für die Abstandsregelung in einem Kraftfahrzeug, werden jedoch in Schritt S5 lediglich die "plausiblen", als reale Objekte erkannten Peakpaare herangezogen.

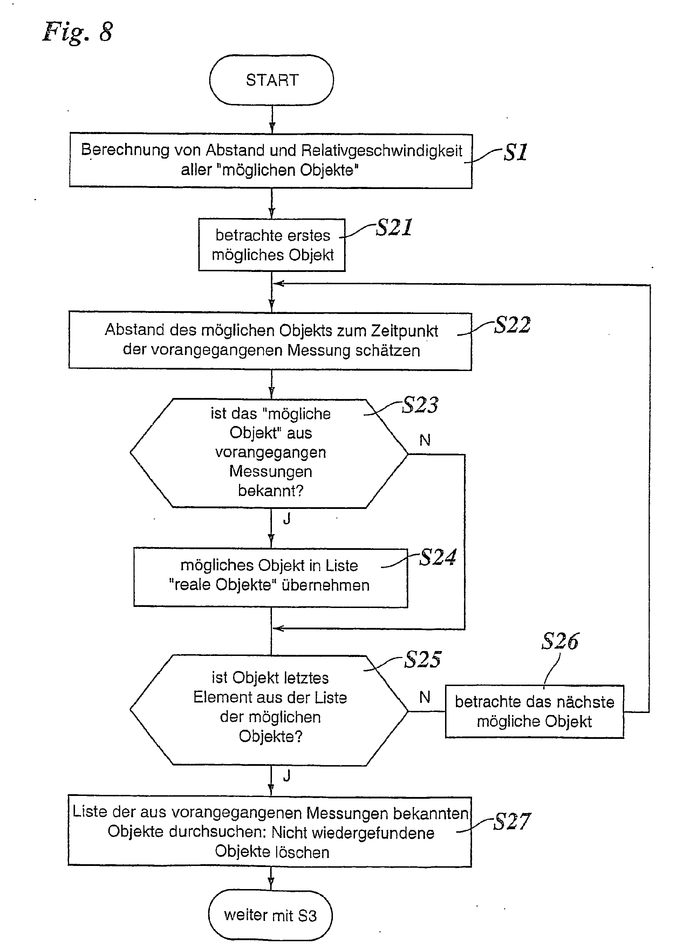

In Figur 8 ist der Verfahrensablauf detaillierter dargestellt.

Im Anschluß an den Schritt S1 wird in Schritt S21 das erste mögliche Objekt aus der Liste aller möglichen Objekte ausgewählt. In Schritt S22 wird dann abgeschätzt, welchen Abstand und welche Relativgeschwindigkeit dieses Objekt im vorangegangenen Meßzyklus gehabt haben müßte. Anhand der Resultate, die im vorangegangenen Meßzyklus in Schritt S3 gespeichert wurden, wird dann Schritt S23 überprüft, ob sich unter den Objekten aus dem vorangegangenen Zyklus tatsächlich ein Objekt mit passendem Abstand und passender Relativgeschwindigkeit findet. Wenn dies der Fall ist, so wird in Schritt S24 das Objekt, das in Schritt S21 ausgewählt wurde, in die Liste der realen Objekt übernommen. Andernfalls wird das Objekt verworfen.

In Schritt S25 wird geprüft, ob bereits sämtliche Objekte des aktuellen Zyklus überprüft worden sind. Wenn dies nicht der Fall ist, wird in Schritt S26 das nächste Objekt aus der aktuellen Liste ausgewählt und es erfolgt ein Rücksprung zu Schritt S22. In einer Schleife mit den Schritten S22 - S26 werden dann nacheinander sämtliche Objekte in dieser Weise überprüft. Nach der Überprüfung für das letzte Objekt wird die Schleife nach Schritt S25 verlassen.

Es ist möglich, daß die Liste der möglichen Objekte, die im vorangegangen Zyklus gespeichert wurde, noch Objekte enthält, die im aktuellen Zyklus nicht wiedergefunden werden. Diese Objekte werden nun in Schritt S27 gelöscht. Bei dieser Ausführungsform wird somit nur ein einfaches "Tracking" durchgeführt, bei dem die aktuellen Objekte nur mit den Objekten aus den unmittelbar vorangegangenen Meßzyklus verglichen werden.

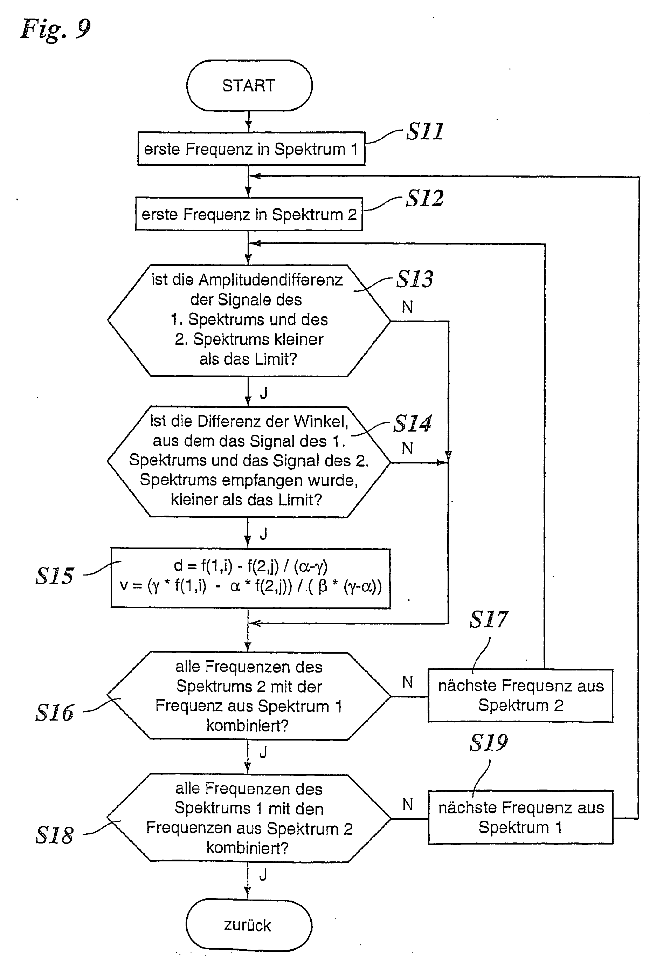

Der Schritt S1 in Figuren 7 und 8 besteht aus einer Unterroutine, deren Flußdiagramm in Figur 9 dargestellt ist. Dabei wird angenommen, daß die im aktuellen Zyklus bei der ersten Messung und bei der zweiten Messung aufgenommenen Spektren jeweils eine der Anzahl der Objekte entsprechende Anzahl von Peaks aufweisen, die jeweils bei einer bestimmten Frequenz liegen. Bei m Objekten enthält somit jedes Spektrum m Frequenzen, an denen sich ein Peak befindet. In Schritt S11 wird die erste dieser Frequenzen aus dem ersten Spektrum ausgewählt. Entsprechend wird in Schritt S12 die erste Frequenz aus dem zweiten Spektrum ausgewählt. In Schritt S13 erfolgt eine erste Plausibilitätsprüfung aufgrund des Kriteriums, daß die Amplituden bei der ersten Frequenz im ersten Spektrum und der ersten Frequenz im zweiten Spektrum ähnliche Werte haben müssen, falls es sich bei dem betreffenden Peakpaar um ein reales Objekt handelt. Wenn die Amplituden deutlich verschieden sind, handelt es sich offensichtlich nicht um Echos von dem selben Objekt, so daß das betreffenden Peakpaar von vornherein verworfen werden kann.

In Schritt S14 erfolgt eine zweite Plausibilitätsprüfung auf der Grundlage des Kriteriums, daß die Signale, die von demselben Objekt reflektiert wurden, auch aus einer ähnlichen Richtung kommen müssen. Wenn dieses Kriterium für das betrachte Peakpaar nicht erfüllt ist, kann dieses Peakpaar ebenfalls verworfen werden. Die Überprüfungen in den Schritten S13 und S14 ermöglichen eine Reduzierung des Rechenaufwands, sind jedoch für das Verfahren nicht zwingend.

In Schritt S15 erfolgt dann die eigentliche Berechnung des Abstands d und der Relativgeschwindigkeit v für das mögliche Objekt, das durch das betrachtete Peakpaar repräsentiert wird. Diese Berechnung erfolgt durch Lösung des im Einleitungsteil der Beschreibung angegebenen Gleichungssystems (2) . Die Frequenz f(1,i) ist hier die Frequenz für den Peak i im ersten Spektrum, und die Frequenz f(2,j) ist die Frequenz des Peaks j im zweiten Spektrum. Wenn die Plausibilitätsprüfung in Schritt S13 oder S14 negativ war, wird der Schritt S15 übersprungen. Die Berechnungen in Schritt S15 erfolgen somit nicht für jede Kombination von Peaks, sondern nur für jene Kombinationen von Peaks, die in dem Sinne plausibel sind, das sie die in den Schritten S13 und S14 überprüften Kriterien erfüllen. Nur diese Peakpaare bleiben in der Liste möglicher Objekte gespeichert.

Die Schritte S16 bis S19 steuern den Programmablauf in zwei ineinander geschachtelten Schleifen, in denen nacheinander sämtliche Kombinationen von Peaks i und j in den beiden Spektren überprüft werden.

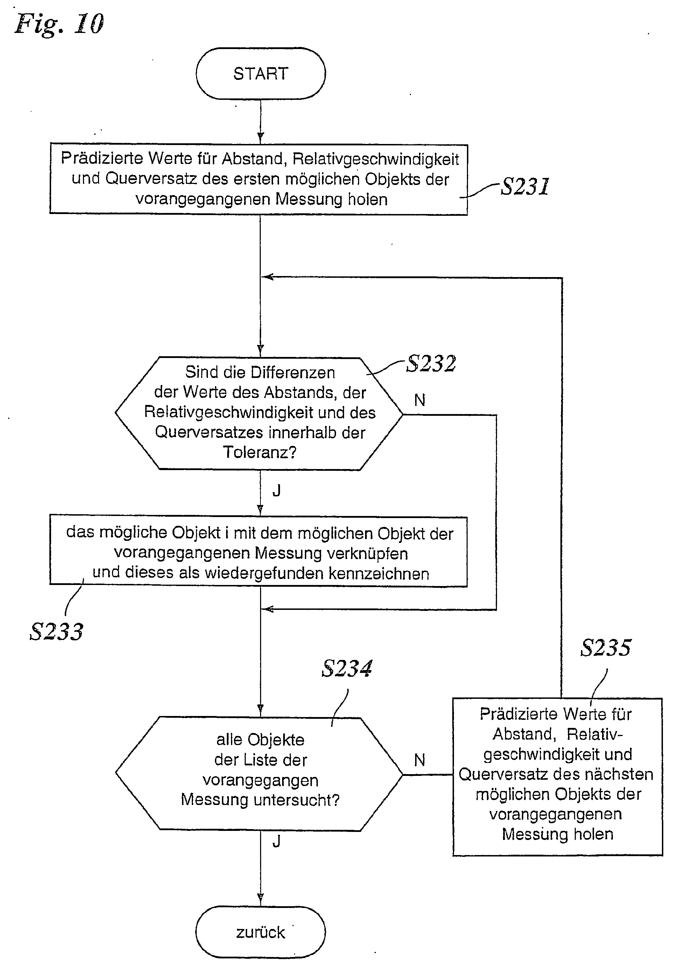

Nachdem auf diese Weise für alle möglichen Objekte, zumindest für alle plausiblen, die Abstände d und die Relativgeschwindigkeiten v berechnet worden sind, kann anhand dieser Daten der Schritt S22 in Figur 8 ausgeführt werden, in dem anhand der Relativgeschwindigkeiten zurückgerechnet wird, welche Abstände die betreffenden Objekte im vorangegangenen Meßzyklus hatten. Umgekehrt kann man selbstverständlich auch so vorgehen, daß anhand der im aktuellen Zyklus erhaltenen Abstands- und Geschwindigkeitsdaten vorausberechnet wird, welche Abstände und Relativgeschwindigkeiten im nächsten Meßzyklus für diese Objekte zu erwarten sind. Figur 10 zeigt eine mögliche, auf dem letzteren Prinzip beruhende Implementierung des Schrittes S23 in Figur 8.

In Schritt S231 werden die im vorangegangenen Meßzyklus prädizierten (vorausgesagten) Werte für den Abstand und die Relativgeschwindigkeit und wahlweise auch für den Querversatz des ersten möglichen Objekts gelesen. Diese prädizierten Werte werden dann in Schritt S232 mit den Werten verglichen, die im aktuellen Zyklus für das gerade betrachtete Objekt (ausgewählt in Schritt S21 in Figur 8) erhalten wurden. Wenn die Abweichungen innerhalb zulässiger Toleranzgrenzen liegen, werden in Schritt S233 die beiden Objekte miteinander verknüpft (Tracking). Andernfalls wird der Schritt S233 übersprungen.

Die Schritte S234 und S235 steuern eine Schleife, mit der die oben beschriebenen Überprüfungen nacheinander für jedes mögliche Objekt aus dem vorausgegangenen Meßzyklus wiederholt werden. Wenn das aktuelle Objekt in Schritt S233 mit einem der Objekte aus dem vorausgegangenen Meßzyklus verknüpft werden konnte, so wird die Abfrage in S23 mit "ja" beantwortet, und das Verfahren wird mit Schritt S24 fortgesetzt. Andernfalls ist die Abfrage mit "nein" zu beantworten, und es erfolgt ein Sprung zu Schritt S25.

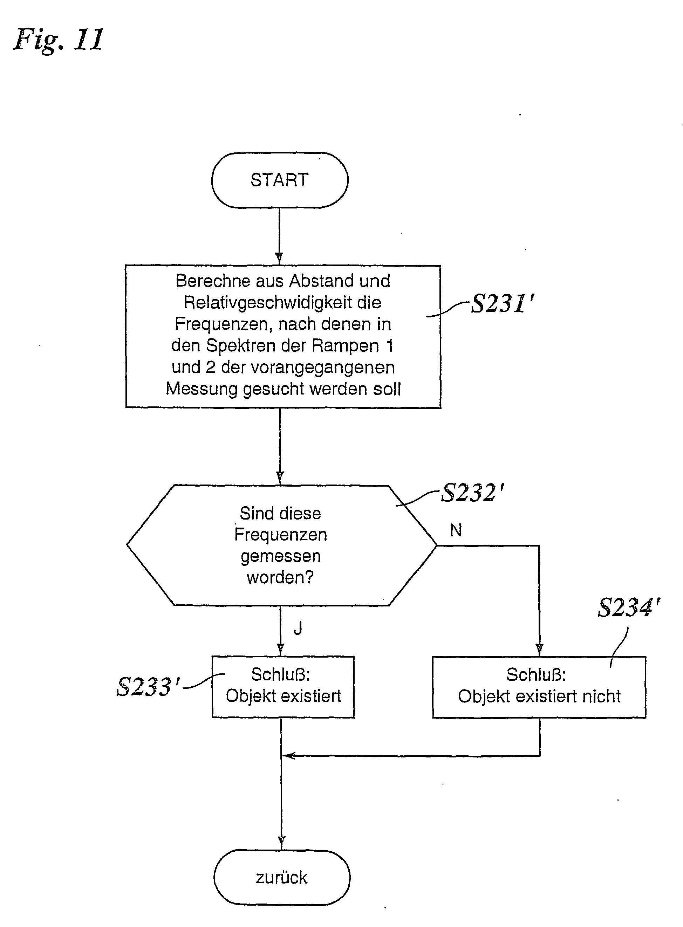

Figur 11 zeigt eine andere mögliche Implementierung des Schrittes S23 in Figur 8. Aus dem in Schritt S22 abgeschätzten Abstand des Objekts zum Zeitpunkt des vorangegangenen Meßzyklus und aus der (als annähernd konstant angenommenen) Relativgeschwindigkeit dieses Objekts werden in Schritt S231' die Frequenzen berechnet, bei denen die Peaks in den beiden im vorangegangenen Zyklus aufgenommenen Spektren gelegen haben müßten. Die Frequenzberechnung erfolgt nach der im Einleitungsteil der Beschreibung angegebenen Gleichung (1). In Schritt S232' wird dann überprüft, ob diese Frequenzen tatsächlich gemessen worden sind. Wenn dies der Fall ist, endet der Schritt S23 mit der Antwort "ja" (Schritt S233'), andernfalls mit der Antwort "nein" (Schritt S234').

Auch die Variante nach Figur 11 kann natürlich auch "vorwärts" ausgeführt werden, indem die Frequenzen berechnet werden, die für den nachfolgenden Meßzyklus zu erwarten sind.

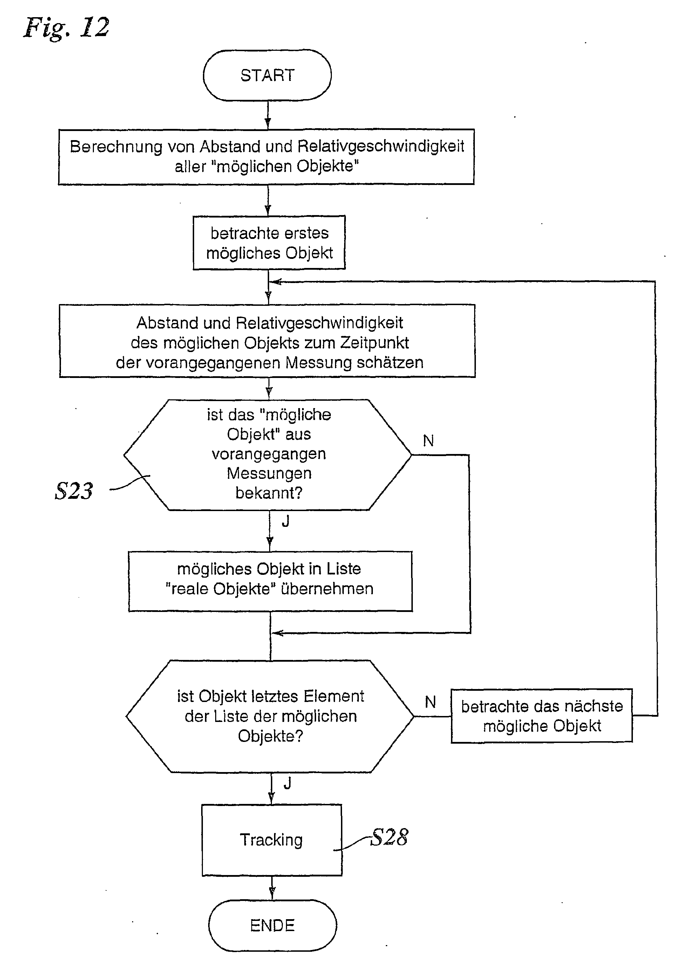

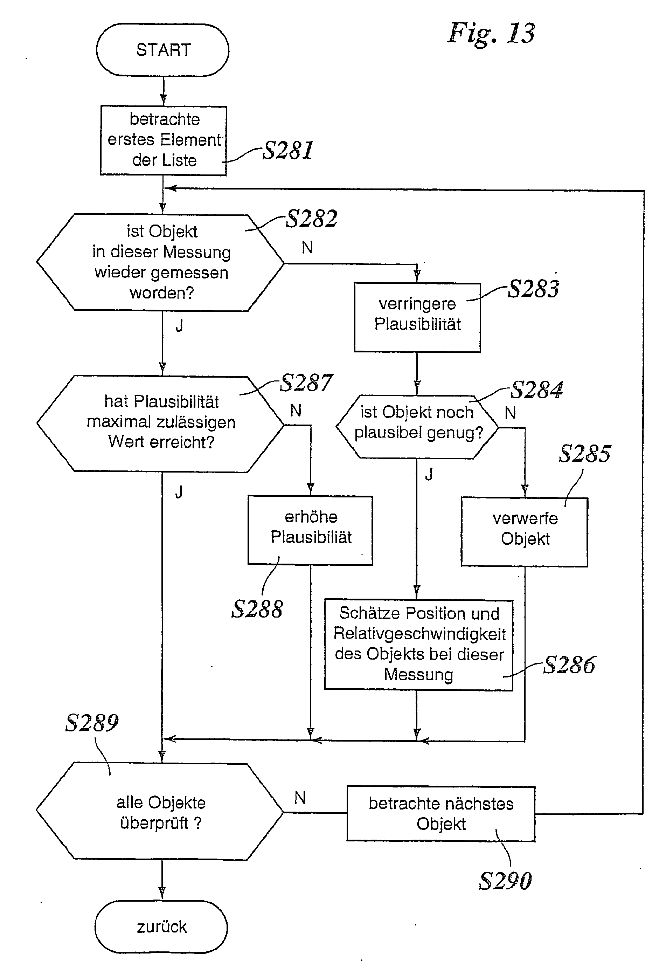

Figur 12 zeigt eine Variante zu dem Programmablauf gemäß Figur 8. Diese Variante unterscheidet sich von Figur 8 im wesentlichen dadurch, daß der Schritt S27 in Figur 8 durch einen Schritt S28 ersetzt ist, in dem ein sogenanntes erweitertes Tracking durchgeführt wird. Die Überprüfung in Schritt S23 kann dabei sowohl nach den Verfahren gemäß Figur 10 (Objektmatching) als auch nach dem Verfahren gemäß Figur 11 (Frequenzmatching) erfolgen. Für den ersteren Fall zeigt Figur 13 eine mögliche Implementierung des Schrittes S28.

In Figur 13 wird in Schritt S281 das erste Element aus der Liste der realen Objekte ausgewählt. In Schritt S282 wird überprüft, ob dieses Objekt im aktuellen Meßzyklus wiedergefunden wurde (positives Ergebnis bei der Abfrage in Schritt S23). Wenn dies nicht der Fall ist, spricht eine gewisse Wahrscheinlichkeit dafür, daß dieses Objekt aus dem Ortungsbereich des Radars verschwunden ist, d. h., es ist weniger plausibel, daß dieses Objekt bei späteren Messungen noch einmal auftauchen wird. Dementsprechend wird in Schritt S283 ein Plausibilitätsparameter für dieses Objekt verringert. In Schritt S284 wird dann geprüft, ob die Plausibilität noch oberhalb eines bestimmten Schwellenwertes liegt. Wenn dies nicht der Fall ist, wird das Objekt in Schritt S385 verworfen, d. h., es wird endgültig aus der Liste der realen Objekte entfernt.

Bei einem positiven Ergebnis in Schritt S284 wird das Objekt weiterhin als reales Objekt geführt, doch liegen keine aktuellen Meßdaten für den Abstand und die Relativgeschwindigkeit vor. Diese Daten werden deshalb in Schritt S286 geschätzt, indem die vorherigen Meßdaten extrapoliert werden.

Wenn das Objekt in Schritt S282 wiedergefunden wurde, wird in Schritt S287 geprüft, ob der Plausibilitätsparameter für dieses Objekt bereits einen oberen Grenzwert erreicht hat. Wenn dies nicht der Fall ist, wird in Schritt S288 die Plausibilität erhöht. Andernfalls wird der Schritt S288 übersprungen.

Die Schritte S289 und S290 steuern wieder eine Schleife, in der die obigen Überprüfungen für jedes Objekt in der Liste der realen Objekte wiederholt werden.

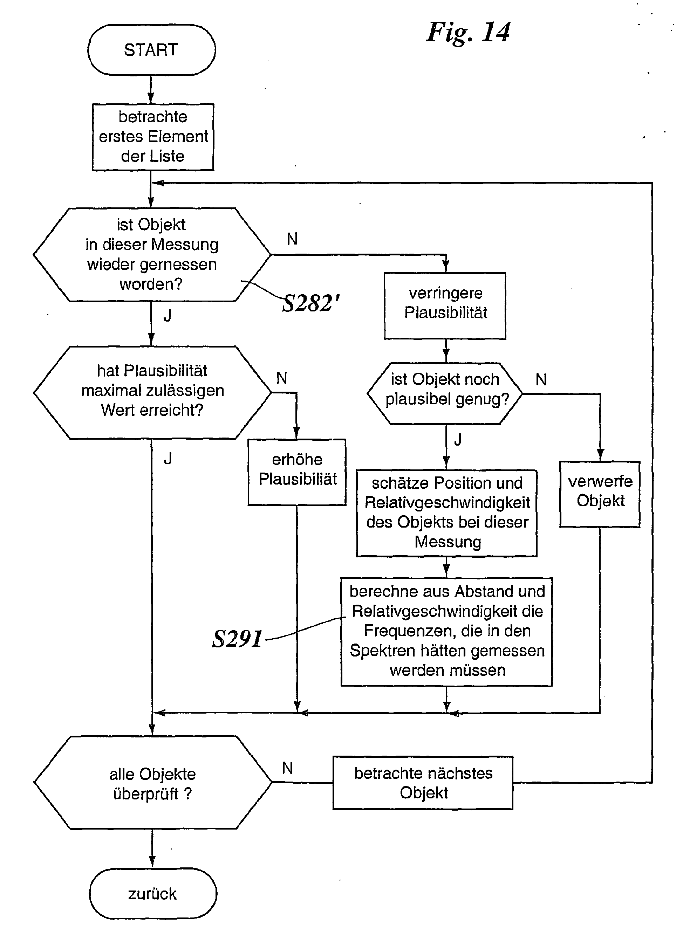

Figur 14 zeigt ein Implementierung des Schrittes S28 für den Fall, daß in Schritt S23 das Frequenzmatching gemäß Figur 11 angewandt wird. Im Vergleich zu Figur 13 weist die Unterroutine gemäß Figur 14 einen zusätzlichen Schritt S291 auf, in dem aus den geschätzten Daten für die Position und Relativgeschwindigkeit des nicht wiedergefundenen Objekts die zugehörigen Frequenzen im ersten und zweiten Spektrum berechnet werden. Diese Frequenzen gelten dann im nächsten Meßzyklus bei dem Schritt S282' als "gemessen".

Das erweiterte Tracking in Schritt S28 macht das Verfahren robuster gegenüber einem vorübergehenden Verlust eines Objektes. Je häufiger das Objekt wiedergefunden wird, desto höher wird seine Plausibilität - bis zu einem oberen Grenzwert. Vorübergehender Verlust des Objektes führt zu einer Verringerung der Plausibilität und das Objekt bleibt so lange in der Liste der realen Objekte geführt, bis die Plausibilität unter einen unteren Grenzwert abgenommen hat.

Hinsichtlich des "Matching" in Schritt S23 und in Figur 10 oder 11 ist bei den Verfahren gemäß Figuren 12 bis 14 allerdings eine leichte Modifikation erforderlich. Bei der Überprüfung in Schritt S23 darf nicht nur auf die unmittelbar vorausgegangene Messung abgestellt werden, sondern es müssen auch hier alle Objekte einbezogen werden, die noch in der Liste der realen Objekte enthalten sind, auch wenn sie bei der unmittelbar vorausgegangenen Messung vorübergehend verloren gegangen waren. Alternativ dazu kann in Schritt S282 (Figur 13) die Überprüfung auf diejenigen Objekte des aktuellen Zyklus ausgedehnt werden, die in Schritt S23 zunächst verworfen wurden. Für diese Objekte ist dann gegebenenfalls der Schritt S24 (Aufnahme in die Liste der realen Objekte) nachzuholen.

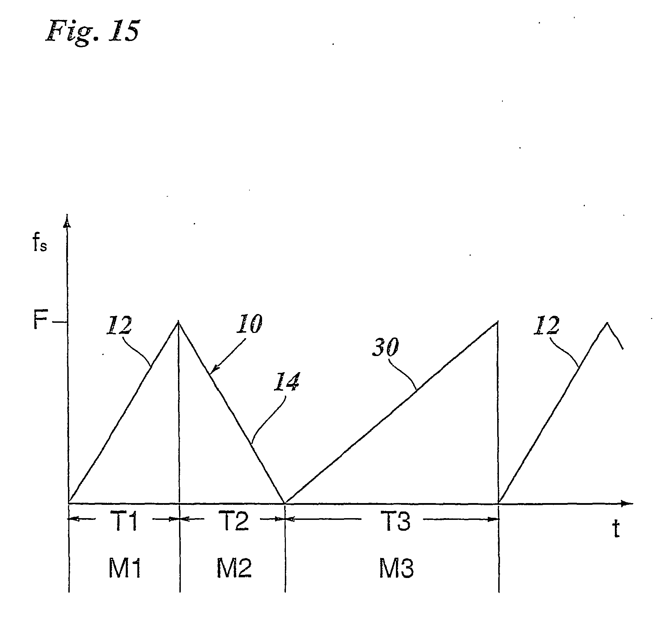

Eine andere Ausführungsform des Verfahrens wird nun unter Bezugnahme auf Figuren 15 bis 18 beschrieben.

Figur 15 zeigt eine abgewandelte Form der Frequenzkurve 10 in Figur 1. Bei dieser Frequenzkurve schließt sich an die fallende Rampe 14 noch einmal eine steigende Rampe 30 an, bevor der Meßzyklus wiederholt wird. Demgemäß werden hier innerhalb eines Meßzyklus drei Messungen M1, M2 und M3 vorgenommen. Bei der dritten Messung M3 ist die Modulationsdauer T3 doppelt so groß wie bei den beiden anderen Messungen. Die Steigung der Rampe 30 ist nur halb so groß wie bei der Rampe 12. Der Frequenzhub F ist folglich auch bei der dritten Messung M3 maximal. Auch bei der dritten Messung können daher die Objektabstände mit optimaler Auflösung gemessen werden. Hinsichtlich der Relativgeschwindigkeiten wird bei der dritten Messung aufgrund der größeren Modulationsdauer eine doppelt so hohe Auflösung erreicht wie bei den Messungen M1 und M2. Die Zyklusdauer ist hier genau so groß wie bei dem herkömmlichen Verfahren, bei dem vier Messungen innerhalb eines Zyklus durchgeführt werden. Der Vorteil des Verfahrens gemäß Figur 15 gegenüber dem herkömmlichen Verfahren besteht darin, daß die Objektabstände innerhalb eines Zyklus dreimal mit maximaler Auflösung gemessen werden können und die Relativgeschwindigkeiten sogar einmal mit doppelter Auflösung.

Für das Matching wird hier anstelle der Resultate der Messungen M1 und M2 in den vorangegangenen Zyklen oder zusätzlich dazu das Resultat der Messung M3 im aktuellen Zyklus oder in einem vorangegangenen oder nachfolgenden Zyklus herangezogen.

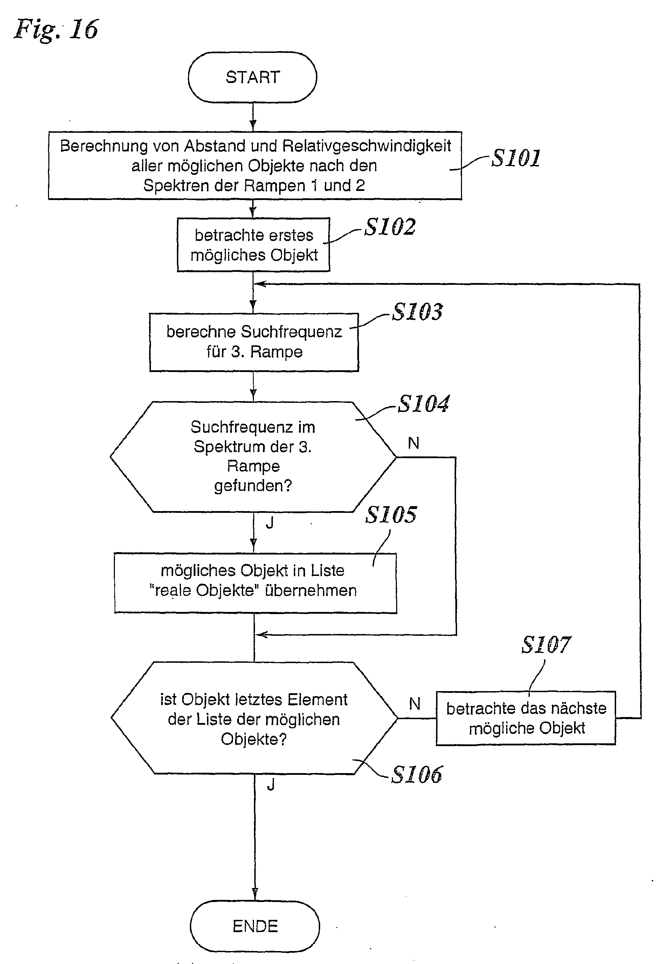

Ein Beispiel für den Verfahrensablauf ist in Figur 16 dargestellt. Die Schritte S101 und S102 in Figur 16 entsprechen den Schritten S1 und S21 in Figur 8. In Schritt S103 wird für jedes mögliche Objekt, dessen Abstände und Relativgeschwindigkeiten in Schritt S101 aufgrund der Messungen M1 und M2 im aktuellen Zyklus berechnet wurden, gemäß Gleichung (1) die erwartete Frequenz des betreffenden Peaks in dem Spektrum berechnet, das in der Messung M3 für die Rampe 30 aufgenommen wird. In Schritt S104 wird dann überprüft, ob bei der dritten Messung tatsächlich ein Peak bei dieser Frequenz gefunden wird. Wenn dies der Fall ist, wird das mögliche Objekt in Schritt F105 in die Liste der realen Objekte übernommen. Andernfalls wird der Schritt S105 übersprungen. Die Schritte S106 und S107 dienen wieder zur Schleifensteuerung.

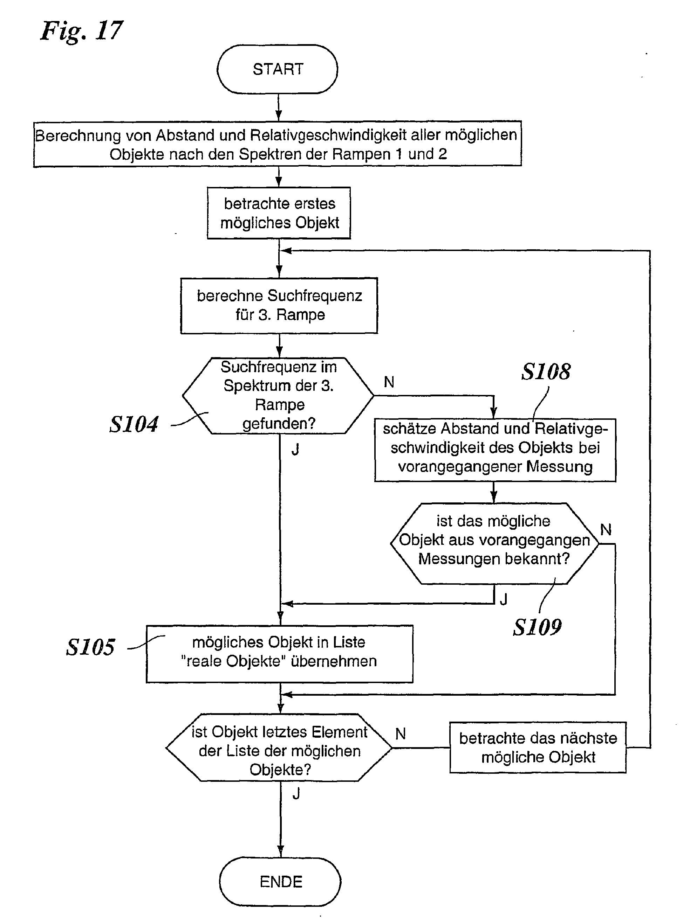

Figur 17 zeigt eine Variante, bei der im Vergleich zu Figur 16 bei negativem Ergebnis der Abfrage in Schritt S104 zwei Schritte S108 und S109 ausgeführt werden. Hier wird das Matching anhand der dritten Messung M3 durch einfaches Tracking und Objektmatching analog zu Figur 8 ergänzt. Dazu wird in Schritt S108 aufgrund der gemessenen Abstands- und Geschwindigkeitsdaten für das betrachtete Objekt geschätzt, welchen Abstand und welche Relativgeschwindigkeit dieses Objekt im vorangegangenen Meßzyklus hatte. In Schritt S109 wird überprüft, ob ein Objekt mit diesem Abstand und dieser Relativgeschwindigkeit im vorangegangenen Zyklus vorhanden war. Wenn dies der Fall war, wird der Schritt S105 ausgeführt, obwohl die berechnete Frequenz bei der dritten Messung nicht bestätigt werden konnte. Nur wenn auch die Abfrage in Schritt S109 negativ ist, wird der Schritt S105 übersprungen.

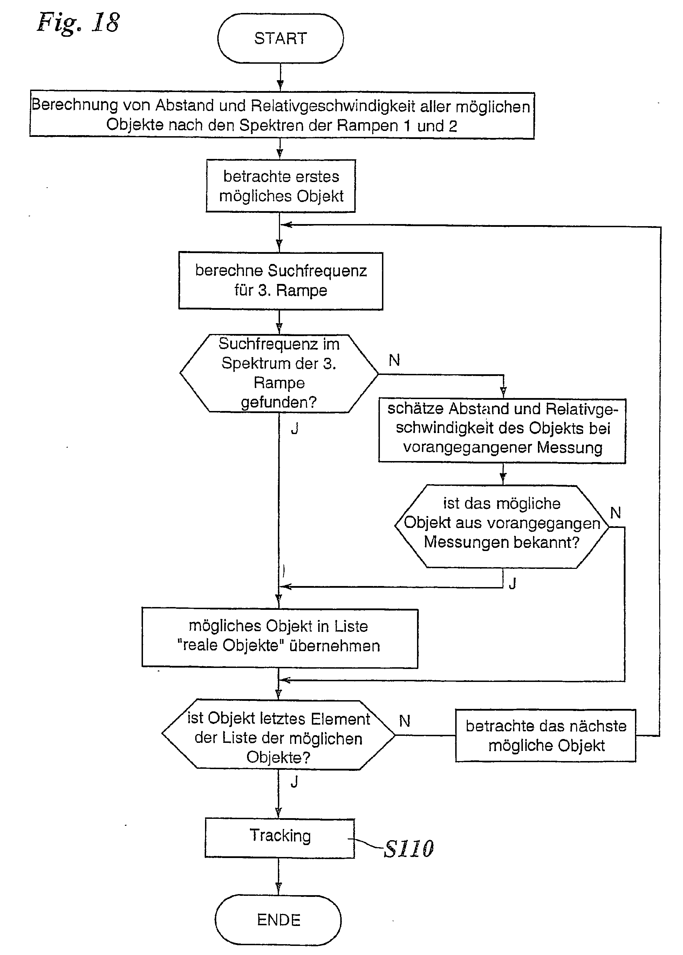

Figur 18 zeigt eine Abwandlung zu Figur 17, bei der zusätzlich am Schluß der Prozedur, in Schritt S110, ein erweitertes Tracking analog zu Figuren 12 bis 14 durchgeführt wird.

## Patentansprüche

1.  Verfahren zur Abstands- und Geschwindigkeitsmessung an mehreren Objekten mittels FMCW-Radar, bei dem:

    - Messungen (M1, M2, M3) mit mindestens zwei verschiedenen Frequenzrampen (12,14,30) zyklisch wiederholt werden,
    - in jeder Messung das gesendete Signal ($f_s$) mit dem empfangenen Signal gemischt wird und das Spektrum (22, 24) des gemischten Signals aufgenommen wird,
    - in einer Matching-Prozedur, die zu demselben Objekt gehörenden Peaks in den für verschiedene Rampen aufgenommenen Spektren einander zugeordnet werden und die Abstände (d) und Geschwindigkeiten (v) der Objekte aus den Frequenzen ($f_1$, $f_2$) der Peaks berechnet werden und
    - in einer Tracking-Prozedur die zu verschiedenen Zeiten gemessenen Objekte anhand der Konsistenz ihrer Abstands- und Geschwindigkeitsdaten miteinander identifiziert werden,
    - jeder Meßzyklus höchstens drei Messungen (M1, M2; M3) mit verschiedenen Frequenzrampen (12, 14; 30) umfaßt,
    - für jede plausible Kombination aus zwei Peaks der Abstand und die Geschwindigkeit eines durch diese Peaks repräsentierten möglichen Objekts berechnet werden, wobei die Kombination dann plausibel ist, wenn die Signale der zwei Peaks aus einer ähnlichen Richtung kommen, und wobei einer bei einer ersten Messung (M1) und der andere bei einer zweiten Messung (M2) desselben Zyklusses aufgenommen wurde,
    - aus dem Abstand und der Geschwindigkeit des möglichen Objekts das erwartete Resultat mindestens einer weiteren Messung (M1, M2; M3) berechnet wird und
    - das mögliche Objekt verworfen wird, wenn nicht mindestens ein erwartetes Resultat mit dem gemessenen Resultat übereinstimmt,

    **dadurch gekennzeichnet,**

    - **daß** in jedem Meßzyklus drei Messungen (M1, M2, M3) durchgeführt werden, und daß die weitere Messung eine dritte Messung (M3) ist, bei der die Modulationsdauer (T3) der Frequenzrampe (30) größer ist als bei den ersten und zweiten Messungen (M1, M2)

2.  Verfahren nach Anspruch 1, **dadurch gekennzeichnet, daß** das erwartete Resultat der weiteren Messung (M3) die Frequenz eines Peaks in dem Spektrum ist, das bei dieser Messung aufgenommen wird.

3.  Verfahren nach Anspruch 1 oder 2, **dadurch gekennzeichnet, daß** auch ein erwartetes Resultat für die erste und zweite Messung (M1, M2) in einem anderen Meßzyklus berechnet und mit dem tatsächlichen Resultat verglichen wird.

4.  Verfahren nach einem der vorstehenden Ansprüche, **dadurch gekennzeichnet, daß** der Vergleich mit den Resultaten der weiteren Messungen für mehrere aufeinanderfolgenden Meßzyklen durchgeführt werden.

5.  Verfahren nach Anspruch 4, **dadurch gekennzeichnet, daß** jedem Objekt ein Plausibilitätsparameter zugeordnet wird, der erhöht wird, wenn das erwartete Resultat mit einem gemessenen Resultat aus einem anderen Meßzyklus übereinstimmt, und der verringert wird, wenn das erwartete Resultat mit keinem der gemessenen Resultate übereinstimmt, und daß das Objekt nur dann verworfen wird, wenn der Plausibilitätsparameter unter einen vorgegebenen Schwellenwert sinkt.

**Claims**

1. Method for distance and speed measurement of a plurality of objects by means of FMCW radar in which:

   - measurements (M1, M2, M3) are repeated cyclically with at least two different frequency ramps (12, 14, 30),
   - in each measurement, the transmitted signal ($f_s$) is mixed with the received signal and the spectrum (22, 24) of the mixed signal is recorded,
   - in a matching procedure, the peaks which are associated with the same object are associated with one another in the spectra recorded for different ramps, and the distances (d) and speeds (v) of the objects are calculated from the frequencies ($f_1$, $f_2$) of the peaks, and
   - in a tracking procedure, the objects measured at different times are identified on the basis of the consistency of their distance and speed data with one another,
   - each measurement cycle comprises at most three measurements (M1, M2; M3) with different frequency ramps (12, 14; 30),
   - the distance and the speed of a possible object which is represented by two peaks is calculated for each plausible combination of these two peaks, with the combination being plausible when the signals of the two peaks come from a similar direction, and with one having been recorded in a first measurement (M1) and the other having been recorded in a second measurement (M2) in the same cycle,
   - the expected result of at least one further measurement (M1, M2; M3) is calculated from the distance and the speed of the possible object, and
   - the possible object is rejected unless at least one expected result matches the measured result,

   **characterized**

   - **in that** three measurements (M1, M2, M3) are carried out in each measurement cycle, and in that the further measurement is a third measurement (M3) in which the modulation duration (T3) of the frequency ramp (30) is greater than in the case of the first and second measurements (M1, M2).

2. Method according to Claim 1, **characterized in that** the expected result for the further measurement (M3) is the frequency of a peak in the spectrum which is recorded for this measurement.

3. Method according to Claim 1 or 2, **characterized in that** an expected result for the first and second measurement (M1, M2) is also calculated in another measurement cycle, and is compared with the actual result.

4. Method according to one of the preceding claims, **characterized in that** the comparison is carried out using the results of the further measurements for a plurality of successive measurement cycles.

5. Method according to Claim 4, **characterized in that** each object is allocated a plausibility parameter which is increased when the expected result matches a measured result from another measurement cycle, and which is reduced when the expected result does not match any of the measured results and the object is rejected only when the plausibility parameter falls below a predetermined threshold value.

**Revendications**

1. Procédé de mesure de la distance et de la vitesse sur plusieurs objets au moyen d'un radar à ondes modulées en fréquence (FMCW), selon lequel :

   - des mesures (M1, M2, M3) sont cycliquement répétées avec au moins deux rampes de fréquence différentes (12, 14, 30),
   - dans chaque mesure le signal envoyé ($f_s$) est mélangé avec le signal reçu et le spectre (22, 24) du signal mélangé est enregistré,
   - dans une procédure d'égalisation les pièces faisant partie du même objet sont associés les uns aux autres dans les spectres enregistrés pour différentes rampes, et les distances (d) et les vitesses (v) des objets sont calculées à partir des fréquences ($f_1$, $f_2$) des pièces, et
   - dans une procédure de poursuite, les objets mesurés à différents instants sont identifiés les uns par rapport aux autres à l'aide de la consistance de leurs données de distance et de vitesse,
   - chaque cycle de mesure comprend au maximum trois mesures (M1, M2 ; M3) avec différentes rampes de fréquence (12, 14 ; 30),
- pour chaque combinaison plausible de deux pièces, on calcule la distance et la vitesse d'un objet possible représenté par ces pièces, cette combinaison étant plausible si les signaux des deux pièces viennent d'une direction similaire, et l'une étant enregistrée lors d'une première mesure (M1) et l'autre lors d'une deuxième mesure (M2) du même cycle,
- le résultat attendu d'au moins une autre mesure (M1, M2 ; M3) est calculé à partir de la distance et de la vitesse de l'objet possible, et
- l'objet possible est rejeté si au moins un résultat attendu ne correspond pas au résultat mesuré,

**caractérisé en ce que**
on effectue trois mesures (M1, M2, M3) dans chaque cycle de mesure, et l'autre mesure est une troisième mesure (M3) dans laquelle la durée de modulation (T3) de la rampe de fréquence (30) est plus grande que pour la première et la deuxième mesures (M1, M2).

2. Procédé selon la revendication 1,
   **caractérisé en ce que**
   le résultat attendu de l'autre mesure (M3) est la fréquence d'un chute dans le spectre enregistré lors de cette mesure.

3. Procédé selon la revendication 1 ou 2,
   **caractérisé en ce qu'**
   un résultat attendu pour la première et la deuxième mesures (M1, M2) est également calculé dans un autre cycle de mesure et comparé avec le résultat réel.

4. Procédé selon l'une quelconque des revendications précédentes,
   **caractérisé en ce que**
   la comparaison avec les résultats des autres mesures est effectuée pour plusieurs cycles de mesure successifs.

5. Procédé selon la revendication 4,
   **caractérisé en ce qu'**
   on associe à chaque objet un paramètre de plausibilité augmenté si le résultat attendu correspond à un résultat mesuré d'un autre cycle de mesure, et réduit si le résultat attendu ne correspond à aucun des résultats mesurés, et l'objet n'est rejeté que si le paramètre de plausibilité passe en dessous d'une valeur de seuil prédéterminée.

*Fig. 1*

*Fig. 2*

*Fig. 3*

*Fig. 4*

*Fig. 5*

*Fig. 6*

**Fig. 7**

START

S1 — Berechnung von Abstand und Relativgeschwindigkeit aller "möglichen Objekte" [i,j]

S2 — Plausibilisierung der "möglichen Objekte" über die Historie; nur bei einer einzigen Messung gefundene Objekte gelten als "falsche Lösung"

S3 — die "möglichen Objekte" dieser Messung speichern: Sie dienen in der kommenden Messung als historische Objekte zur Plausibilisierung

S4 — plausible Objekte zur Regelung verwenden

ENDE

*Fig. 8*

```
                    ┌─────────────┐
                    │    START    │
                    └──────┬──────┘
                           │
        ┌──────────────────▼──────────────────┐
        │ Berechnung von Abstand und          │──S1
        │ Relativgeschwindigkeit              │
        │ aller "möglichen Objekte"           │
        └──────────────────┬──────────────────┘
                           │
              ┌────────────▼────────────┐
              │   betrachte erstes      │──S21
              │   mögliches Objekt      │
              └────────────┬────────────┘
                           │
        ┌──────────────────▼──────────────────┐
        │ Abstand des möglichen Objekts zum   │──S22
        │ Zeitpunkt der vorangegangenen       │
        │ Messung schätzen                    │
        └──────────────────┬──────────────────┘
                           │
                  ┌────────▼────────┐
                 ╱ ist das "mögliche ╲     S23
                ╱  Objekt" aus        ╲  N
                ╲  vorangegangen      ╱────┐
                 ╲ Messungen         ╱     │
                  ╲ bekannt?        ╱      │
                   └──────┬────────┘       │
                          │ J              │
              ┌───────────▼───────────┐    │
              │ mögliches Objekt in   │──S24│
              │ Liste "reale Objekte" │    │
              │ übernehmen            │    │
              └───────────┬───────────┘    │
                          │◄───────────────┘
                  ┌───────▼───────┐
                 ╱ ist Objekt      ╲    S25         S26
                ╱  letztes Element   ╲  N   ┌──────────────────┐
                ╲  aus der Liste     ╱──────│ betrachte das    │
                 ╲ der möglichen    ╱       │ nächste mögliche │
                  ╲ Objekte?       ╱        │ Objekt           │
                   └──────┬───────┘         └──────────────────┘
                          │ J
        ┌─────────────────▼─────────────────┐
        │ Liste der aus vorangegangenen     │──S27
        │ Messungen bekannten Objekte       │
        │ durchsuchen: Nicht wiedergefundene│
        │ Objekte löschen                   │
        └─────────────────┬─────────────────┘
                          │
                   ┌──────▼──────┐
                   │ weiter mit S3│
                   └─────────────┘
```

*Fig. 9*

START

erste Frequenz in Spektrum 1 — *S11*

erste Frequenz in Spektrum 2 — *S12*

ist die Amplitudendifferenz der Signale des 1. Spektrums und des 2. Spektrums kleiner als das Limit? — *S13* N

J

ist die Differenz der Winkel, aus dem das Signal des 1. Spektrums und das Signal des 2. Spektrums empfangen wurde, kleiner als das Limit? — *S14* N

J

*S15* — $d = f(1,i) - f(2,j) / (\alpha-\gamma)$
$v = (\gamma * f(1,i) - \alpha * f(2,j)) / (\beta * (\gamma-\alpha))$

*S17*

alle Frequenzen des Spektrums 2 mit der Frequenz aus Spektrum 1 kombiniert? — *S16* N nächste Frequenz aus Spektrum 2

J

*S19*

alle Frequenzen des Spektrums 1 mit den Frequenzen aus Spektrum 2 kombiniert? — *S18* N nächste Frequenz aus Spektrum 1

J

zurück

*Fig. 10*

START

Prädizierte Werte für Abstand, Relativgeschwindigkeit und Querversatz des ersten möglichen Objekts der vorangegangenen Messung holen — *S231*

Sind die Differenzen der Werte des Abstands, der Relativgeschwindigkeit und des Querversatzes innerhalb der Toleranz? — *S232*  N

J

das mögliche Objekt i mit dem möglichen Objekt der vorangegangenen Messung verknüpfen und dieses als wiedergefunden kennzeichnen

*S233*

*S234*

alle Objekte der Liste der vorangegangen Messung untersucht?  N

*S235*

Prädizierte Werte für Abstand, Relativgeschwindigkeit und Querversatz des nächsten möglichen Objekts der vorangegangenen Messung holen

J

zurück

*Fig. 11*

```
              ┌─────────────┐
              │    START    │
              └──────┬──────┘
                     │
                     ▼
    ┌────────────────────────────────┐
    │   Berechne aus Abstand und      │          ╱─S231'
    │  Relativgeschwidigkeit die      │
    │  Frequenzen, nach denen in      │
    │  den Spektren der Rampen 1      │
    │  und 2 der vorangegangenen      │
    │  Messung gesucht werden soll    │
    └────────────────┬───────────────┘
                     │
                     ▼
             ╱─────────────────╲                 ╱─S232'
            ╱    Sind diese      ╲
           │     Frequenzen       │          N
           ╲    gemessen         ╱──────────────┐
            ╲    worden?        ╱               │
             ╲─────────────────╱                │
                     │                          │        S234'
                     │ J                        │        ╱
                     ▼                          ▼
          ┌──────────────────┐       ┌──────────────────────┐
    S233' │     Schluß:       │       │       Schluß:         │
    ╱─────│  Objekt existiert │       │  Objekt existiert nicht│
          └─────────┬────────┘       └───────────┬──────────┘
                    │                             │
                    │◄────────────────────────────┘
                    ▼
            ┌──────────────┐
            │    zurück     │
            └──────────────┘
```

## Fig. 12

START

Berechnung von Abstand und Relativgeschwindigkeit
aller "möglichen Objekte"

betrachte erstes
mögliches Objekt

Abstand und Relativgeschwindigkeit
des möglichen Objekts zum Zeitpunkt
der vorangegangenen Messung schätzen

S23 — ist das "mögliche
Objekt" aus
vorangegangen
Messungen
bekannt?

N

J

mögliches Objekt in Liste
"reale Objekte" übernehmen

ist Objekt letztes Element
der Liste der möglichen
Objekte?

N betrachte das nächste
mögliche Objekt

J

Tracking — S28

ENDE

*Fig. 13*

START

betrachte erstes Element der Liste — S281

ist Objekt in dieser Messung wieder gemessen worden? — S282

N → verringere Plausibilität — S283

ist Objekt noch plausibel genug? — S284

N → verwerfe Objekt — S285

J → Schätze Position und Relativgeschwindigkeit des Objekts bei dieser Messung — S286

J (von S282) → hat Plausibilität maximal zulässigen Wert erreicht? — S287

N → erhöhe Plausibiliät — S288

J → alle Objekte überprüft ? — S289

N → betrachte nächstes Objekt — S290

zurück

*Fig. 14*

START

betrachte
erstes Element
der Liste

ist Objekt
in dieser Messung
wieder gernessen
worden?

N

*S282'*

J

verringere
Plausibilität

hat Plausibilität
maximal zulässigen
Wert erreicht?

N

ist Objekt noch
plausibel genug?

N

J

J

erhöhe
Plausibiliät

schätze Position und
Relativgeschwindigkeit
des Objekts bei dieser
Messung

verwerfe
Objekt

*S291*

berechne aus Abstand und
Relativgeschwindigkeit die
Frequenzen, die in den
Spektren hätten gemessen
werden müssen

alle Objekte
überprüft ?

N

betrachte nächstes
Objekt

zurück

*Fig. 15*

## Fig. 16

START

Berechnung von Abstand und Relativgeschwindigkeit aller möglichen Objekte nach den Spektren der Rampen 1 und 2 — S101

betrachte erstes mögliches Objekt — S102

berechne Suchfrequenz für 3. Rampe — S103

Suchfrequenz im Spektrum der 3. Rampe gefunden? — S104

N

J

mögliches Objekt in Liste "reale Objekte" übernehmen — S105

S107

ist Objekt letztes Element der Liste der möglichen Objekte? — S106

N betrachte das nächste mögliche Objekt

J

ENDE

*Fig. 17*

*Fig. 18*

```
                    ┌──────────────┐
                    │    START     │
                    └──────────────┘
                            │
┌───────────────────────────────────────────────────────────┐
│ Berechnung von Abstand und Relativgeschwindigkeit aller    │
│ möglichen Objekte nach den Spektren der Rampen 1 und 2     │
└───────────────────────────────────────────────────────────┘
                            │
                  ┌──────────────────┐
                  │ betrachte erstes │
                  │ mögliches Objekt │
                  └──────────────────┘
                            │
                  ┌──────────────────┐
                  │ berechne         │
                  │ Suchfrequenz     │
                  │ für 3. Rampe     │
                  └──────────────────┘
                            │
                  ╱ Suchfrequenz im ╲        N
                  ╲ Spektrum der 3.  ╱──────────────┐
                  ╱ Rampe gefunden?  ╲              │
                            │ J                     ▼
                            │        ┌──────────────────────────┐
                            │        │ schätze Abstand und      │
                            │        │ Relativgeschwindigkeit   │
                            │        │ des Objekts bei          │
                            │        │ vorangegangener Messung  │
                            │        └──────────────────────────┘
                            │                     │
                            │          ╱ ist das mögliche ╲    N
                            │          ╲ Objekt aus        ╱───────┐
                            │          ╱ vorangegangen     ╲       │
                            │          ╲ Messungen bekannt?╱       │
                            │◄──────────────── J ──────────┘       │
                  ┌──────────────────┐                            │
                  │ mögliches Objekt │                            │
                  │ in Liste "reale  │                            │
                  │ Objekte"         │                            │
                  │ übernehmen       │                            │
                  └──────────────────┘                            │
                            │◄────────────────────────────────────┘
                  ╱ ist Objekt letztes ╲     N   ┌──────────────────┐
                  ╲ Element der Liste   ╱────────│ betrachte das    │
                  ╱ der möglichen       ╲        │ nächste mögliche │
                  ╲ Objekte?            ╱        │ Objekt           │
                            │ J                  └──────────────────┘
                  ┌──────────────────┐
                  │    Tracking      │────── S110
                  └──────────────────┘
                            │
                    ┌──────────────┐
                    │     ENDE     │
                    └──────────────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5600561 A
- US 5625362 A
- US 5963162 A
- US 5619208 A

**In der Beschreibung aufgeführte Nicht-Patentliteratur**

- Adaptive Cruise Control. **WINNER.** Automotive Electronics Handbook. McGraw-Hill Inc, 1999